# EUROPEAN PATENT SPECIFICATION

(11) **EP 0 530 014 B1**
(45) Date of publication and mention of the grant of the patent: **28.12.1994**
(21) Application number: 92307784.6
(22) Date of filing: 26.08.1992
(51) Int. Cl.: A23P 1/08, A23L 1/31, A23L 1/325, A23C 19/16

(54) **Process for preparing a coated deep-frozen foodstuff**
Verfahren zur Herstellung eines tiefgefrorenen, beschichteten Nahrungsmittels
Procédé de préparation d'un produit alimentaire surgelé enrobé

(30) Priority: 30.08.1991 EP 91202208
(43) Date of publication of application: 03.03.1993
(73) Proprietor: UNILEVER PLC, London EC4P 4BQ (GB); UNILEVER N.V., 3013 AL Rotterdam (NL)
(72) Inventor: Schafer, Wolfgang, W-2857 Langen-Sievern (DE); Schmiedel, Manfred, W-2858 Schiffdorf-Spoden (DE)
(74) Representative: Kirsch, Susan Edith

(56) References cited:
- EP-A- 0 235 308
- EP-A- 0 327 857
- EP-A- 0 333 886
- FR-A- 2 248 793

## Description

In the frozen food industry many types of coated food products are produced, eg battered and breaded meat, fish, cheese, vegetables, fruit, but also escalope cordon bleu and such like composite products. There is a continuous need for novel products, both regarding shape, structure, taste and composition thereof. In the preparation of coated food products pieces or portions of a food material, generally frozen, are usually provided with an adhesive material such as batter, liquid egg or white of egg or proteinaceous meat or fish exudate and thereafter coated with particulate breading material such as bread crumbs, coarse whole meal flaky crumbs as known from "Frozen and Chilled Foods" January 1986 pages 16 and 17, or fresh root vegetables particles and fresh potato particles as described in EP A 235 308 and in US A 3 532 509 and thereafter fried or prefried. This frying or prefrying requires a separate process step and brings about an uptake of considerable amounts of fat or oil.

EP 327 857 provides a food product and a process for its preparation in the form of a coated central core consisting of meat, poultry, fish, seafood, cheeses, fruit or vegetables characterised by the feature that at least a major proportion of the outer layer comprises at least one dried fragmented vegetable.

The present invention seeks to provide a vegetable-coated food product of reduced fat content which is particularly suitable for microwaving, although ovening may be used as well. Shallow fat frying is applicable, but this will of course increase the fat content of the final product. This also applies to deep fat frying.; Accordingly the invention provides a process for preparing a deep frozen food product comprising
(a) providing a portion of food material with a first coating of an adhesive material;
(b) providing the portion of food material with a second coating of particulate vegetable material wherein the vegetable material is of seed, root or tuberous vegetable and in an unfried, moist condition; and
(c) deep-freezing the product;
characterised in that the vegetable material is in a deep frozen condition and that the coated product is directly deep frozen without any intermediate heat treatment.

Thus the present invention provides a process for the preparation of a deep frozen food product, comprising a food material, in particular fish, meat or cheese, although not excluding vegetables, fruit, escalope cordon bleu and similar composite products, and a coating, the coating comprising an adhesive material and unfried, moist, deep frozen particulate seed, root or tuberous vegetable and the product being in an unfried, uncooked condition.

The expression "fried" in this specification and claims encompasses both fully fried and parfried. The expression "moist" does not exclude materials comprising frozen water but clearly does not relate to dry coating materials like the usual bread crumbs, Japanese crumbs and puffed or flaked cereal material.

It has been found that the use of deep-frozen vegetable particles for formation of the coating rather than fresh or lightly frozen vegetable particles assists the setting of the adhesive material part of the coating, removing the need for a pre-frying step, thus a low fat product, which is additionally microwaveable can be formed.

Furthermore the use of deep frozen vegetable particles facilitates the manufacture of the food product, frozen vegetable particles being less fragile, and therefore easier to handle, compared with fresh lightly frozen vegetable particles.

Dependent on the type of vegetables used a blanching step before deep-freezing may be possible, advantageous or even required. The vegetable used for coating may be particulate by nature, like peas and maize grains, or rendered particulate, such as by chopping or cutting. Examples of seed vegetables being peas and maize, of root vegetables: carrot, swede, turnip, parsnip, salsify, celeriac and of tuberous vegetables, potato, sweet potato and Jerusalem artichoke.

Preferably the particulate vegetable coating material is relatively coarse, ie having a particle size of at least 2 x 2 x 2 mm and in particular of at least 3 x 3 x 3 mm. This does not mean that the particles should be cubical but only that the dimension of the particles in all directions should be at least two or preferably at least 3 mm.

The product produced by the process according to this invention has a strikingly lower fat content than usual fried or prefried food products known until now. Specifically, it comprises less than 7% and in particular less than 4% and by preference from 0 to 2% by weight of oil or fat, apart of course from the oil or fat contained in the body of the portion of food material, eg the fat naturally contained in fish or meat.

In a preferred embodiment the food material is not in a done condition. In practice this means that it is either raw or par cooked in such a manner that the remaining heat treating time for preparation for consumption of the food material and that of the vegetable coating material are roughly the same.

For suitably maintaining the quality and keeping the vegetable material in a particulate, flowable condition the temperature thereof is controlled below -5°C.

If the product produced by the process according to the invention is prolongedly stored without suitable temperature and moisture control there is some chance of deterioration attended with discolouration and drying out, called freezerburn. This phenomenon may be reduced or even prevented if a barrier coating for protection against freezerburn is provided onto the particulate vegetable material before or, less preferred, after providing said material onto the portion of food material. The vegetable particles may, for instance, be treated in a paddle mixer or a revolving drum into which the coating material is sprayed in a liquid form, although this coating material may as well be sprayed onto the ready vegetable coated food product. Suitable barrier coating materials are fat or oil, a glaze or an edible waxy material.

The present invention will be illustrated by way of explanation only in the following examples. In this specification, examples and claims all percentages are by weight, unless otherwise indicated.

### Example I

38 gram rectangular portions of boneless frozen fish lying on a mesh conveyor belt were coated in a usual battering equipment with 15 to 18 grams of a batter coating. Any type of batter could be used for this purpose. Immediately thereafter the battered portions were coated with a particulate, deep frozen mixture of

| | | |
|---|---|---|
| raw carrot | 4 x 4 x 4 mm | 55% |
| raw celeriac | 4 x 4 x 4 mm | 30% |
| blanched peas | 6 mm ⌀ | 15% |

in an amount varying from 18 to 22 g per portion. Immediately thereafter the coated portions were deep frozen and packed. During the latter coating care was taken by adding liquid nitrogen that the temperature of the vegetable mixture did not surmount -5°C. For this purpose liquid air, solid carbon dioxide or similar coolants could be used as well.

### Example II

The process of Example I was repeated using blanched carrot and blanched celeriac.

### Examples III and IV

The processes of Examples I and II were repeated using vegetable mixtures which were coated with 4% sunflower oil, calculated on the amount of vegetable mixture.

### Examples V and VI

The processes of Examples I and II were repeated, the only difference being that the vegetable coated fish portions were sprayed with 1 g sunflower oil each and thereafter deep frozen.

### Example VII

1 cm thick rectangular portions of 30 g Gouda cheese were battered with 12 g of nutmeg containing batter and thereafter coated with 3 x 3 x 6 mm deep frozen swede particles containing 3% of coco fat coated thereon in an amount of 15 g per portion. The vegetable coated portions were deep frozen and packed.

### Example VIII

1 cm thick deep frozen 50 g rounds of minced, seasoned, lean beef were coated with raw white of egg and thereafter with 20 g of a particulate, deep frozen mixture of

| | |
|---|---|
| 50% raw carrot | 3 x 3 x 5 mm |
| 25% blanched celeriac | 4 x 4 x 4 mm |
| 15% blanched maize grains | 5-7 mm |
| 10% raw green paprika | 4 x 4 x 4 mm |

Prior to coating this mixture was sprayed with 4% of olive oil. The vegetable coated portions of minced beef were finally deep frozen and packed.

After three month's storage time the products of Examples III to VI had a better colour than those of Examples I and II, although after preparation by cooking in microwave oven the difference was less pronounced. This was even more true after frying. Best results were noted for the products of Examples III and IV.

### Example IX

50 g portions of white meat were par cooked by simmering for 5 minutes in a broth of 90°C. After removal from the broth and draining the portions were battered with about 20 grams batter each. Subsequently a deep frozen mixture of

| | | |
|---|---|---|
| raw celeriac | 5 x 5 x 5 mm | 20% |
| blanched peas | 6 mm ⌀ | 20% |
| blanched potato | 4 x 4 x 6 mm | 60% |

containing 4% maize oil was adhered to said batter coating in an amount of about 25 grams per portion. Thereafter the portions were blast frozen to below -20°C and packed.

## Claims

1. A process for preparing a deep frozen food product comprising
(a) providing a portion of food material with a first coating of an adhesive material;
(b) providing the portion of food material with a second coating of particulate vegetable material wherein the vegetable material is of seed, root or tuberous vegetable and in an unfried, moist condition; and
(c) deep-freezing the product;
characterised in that the vegetable material is in a deep frozen condition and that the coated product is directly deep frozen without any intermediate heat treatment.

2. A process according to claim 1, characterised in that the food material is raw or only part cooked.

3. A process according to any preceding claim characterised in that the particulate vegetable material has a particulate size of at least 2 x 2 x 2 mm and preferably of at least 3 x 3 x 3 mm.

4. A process according to any preceding claim characterised in that the particulate vegetable material before or after providing it onto the portion of food material is coated with a barrier coating for protection against freezerburn.

## Patentansprüche

1. Verfahren zur Herstellung eines tiefgefrorenen Nahrungsmittelprodukts, welches umfaßt:
(a) Versehen einer Portion des Nahrungsmittelmaterials mit einem ersten Überzug aus einem Haftmaterial;
(b) Versehen der Portion des Nahrungsmittelmaterials mit einem zweiten Überzug aus teilchenförmigem Gemüsematerial, wobei das Gemüsematerial aus Samen-, Wurzel- oder Knollengemüse besteht und in einem ungebratenen, feuchten Zustand vorliegt; und
(c) Tieffrieren des Produkts;
dadurch gekennzeichnet, daß das Gemüsematerial in einem tiefgefrorenen Zustand vorliegt, und daß das überzogene Produkt ohne jegliche Zwischenwärmebehandlung tiefgefroren wird.

2. Verfahren nach Anspruch 1, dadurch gekennzeichnet, daß das Nahrungsmittelmaterial roh oder nur teilweise gekocht ist.

3. Verfahren nach einem der vorhergehenden Ansprüche, dadurch gekennzeichnet, daß das teilchenförmige Gemüsematerial eine Teilchengröße von zumindest 2 x 2 x 2 mm und vorzugsweise zumindest 3 x 3 x 3 mm aufweist.

4. Verfahren nach einem der vorhergehenden Ansprüche, dadurch gekennzeichnet, daß das teilchenförmige Gemüsematerial vor oder nach seinem Aufbringen auf der Portion des Nahrungsmittelmaterials mit einem Sperrüberzug als Schutz gegen Gefrierbrand überzogen wird.

## Revendications

1. Procédé de préparation d'un produit alimentaire surgelé comprenant :
(a) la production d'une portion de denrée alimentaire avec un premier enrobage d'un adhésif :
(b) la production de la portion de denrée alimentaire avec un second enrobage de substance végétale particulaire, dans laquelle la substance végétale est de graine, de racine ou de végétal tubéreux et à l'état cru et moelleux ; et
(c) la surgélation du produit ;
caractérisé en ce que la substance végétale est à l'état surgelé que le produit enrobé est directement surgelé sans traitement thermique intermédiaire.

2. Procédé selon la revendication 1, caractérisé en ce que la denrée alimentaire est crue ou seulement partiellement cuite.

3. Procédé selon l'une quelconque des revendications précédentes, caractérisé en ce que le végétal particulaire a une grosseur de particule d'au moins 2 x 2 x 2 mm et de préférence d'au moins 3 x 3 x 3 mm.

4. Procédé selon l'une quelconque des revendications précédentes, caractérisé en ce que la substance végétale particulaire, avant ou après l'avoir appliquée sur la portion de denrée alimentaire, est revêtue d'un enrobage de séparation pour la protéger contre la brûlure de congélation.
